# EUROPEAN PATENT APPLICATION

(11) **EP 4 703 872 A1**
(43) Date of publication of application: **04.03.2026**
(21) Application number: 25190806.7
(22) Date of filing: 21.07.2025
(51) Int. Cl.: G06F 8/65, G06F 9/445, G06N 20/00, G06N 3/08

(54) **METHODS AND APPARATUS TO PROVIDE RECOMMENDATIONS FOR DEVICE MANAGEMENT**

(30) Priority: 30.08.2024 US 202418821673
(71) Applicant: Intel Corporation, Santa Clara, CA 95054 (US)
(72) Inventor: DIVAN KOLLER, Mario Jose, Hillsboro, 97124-5142 (US); ORTEGA DE MUES, Mariano, Hillsboro, 97124 (US); CARRANZA, Marcos Emanuel, Portland, 97229 (US); MARTINEZ-SPESSOT, Cesar Ignacio, Hillsboro, 97123 (US); GUZMAN, Mateo, Beaverton, 97078 (US); GUIM BERNAT, Francesc, 08036 Barcelona (ES); BROWNE, John Joseph, Limerick, V94 C44N (IE); AGERSTAM, Mats Gustav, Portland, 97229 (US); LEWIS, Gavin Bartlett, Hillsboro, 97124 (US); PILLAI, Abhishek, Beaverton, 97007 (US); SIRLAPU, Tejaswini, Hillsboro, 97124 (US)
(74) Representative: Maiwald GmbH

(57) **Abstract**

Systems, apparatus, articles of manufacture, and methods are disclosed to provide recommendations for device management. An example non-transitory machine readable storage medium comprising instructions to cause programmable circuitry to at least: determine an action to be performed for a plurality of computing devices, the action includes information about the computing devices and an operation to be performed on the computing devices; compare the action with a plurality of prior actions; and report a predicted result based on a similarity of the action with at least one of the plurality of prior actions.

## Description

### BACKGROUND

Device management systems, sometimes known as fleet management systems, facilitate the management of large number of devices (e.g., physical devices, virtual devices, cloud devices, edge devices, etc.). Such device management systems direct, monitor, and manage actions performed on the devices. For example, a set of actions may be known as a campaign, which includes establishing a logic mechanism to guide, monitor, and implement a scalable batch of actions on multiple distributed devices. Actions may include deploying software, firmware, etc., modifying settings and configurations, managing virtual hardware, etc.

### BRIEF DESCRIPTION OF THE DRAWINGS

FIG. 1 is a block diagram of an example environment in which an example management circuitry operates to manage a plurality of computing devices.
FIG. 2 is a block diagram of an example implementation of the management circuitry of FIG. 1.
FIG. 3 is a block diagram of an example layout of data utilized by the management circuitry of FIG 2.
FIGS. 4-7 are flowcharts representative of example machine readable instructions and/or example operations that may be executed, instantiated, and/or performed by example programmable circuitry to implement the management circuitry of FIG. 2.
FIG. 8 is a block diagram of an example processing platform including programmable circuitry structured to execute, instantiate, and/or perform the example machine readable instructions and/or perform the example operations of FIGS. 4-7 to implement the management circuitry of FIG. 2.
FIG. 9 is a block diagram of an example implementation of the programmable circuitry of FIG. 8.
FIG. 10 is a block diagram of another example implementation of the programmable circuitry of FIG. 8.

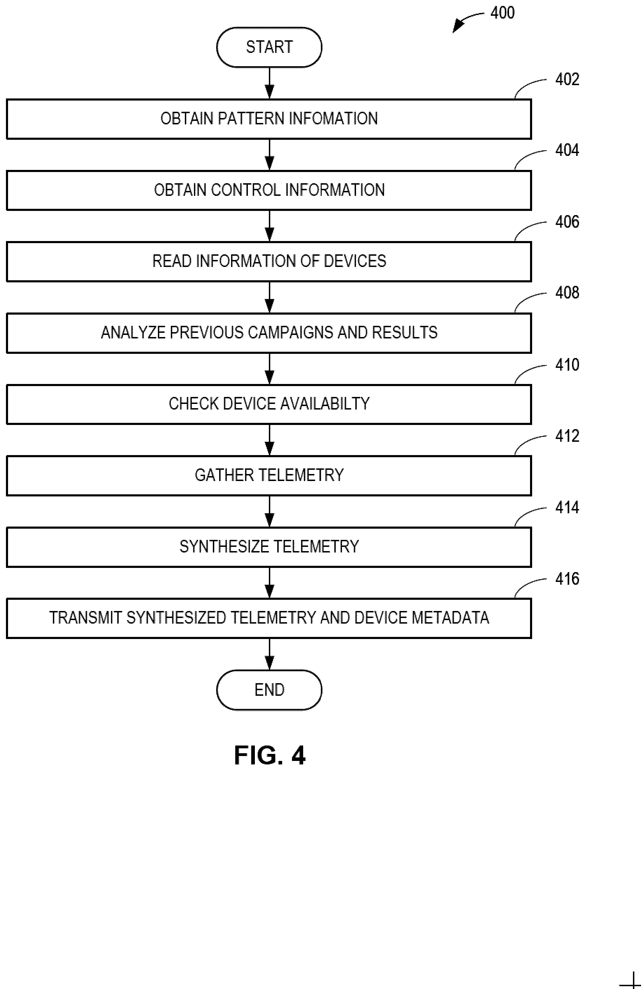

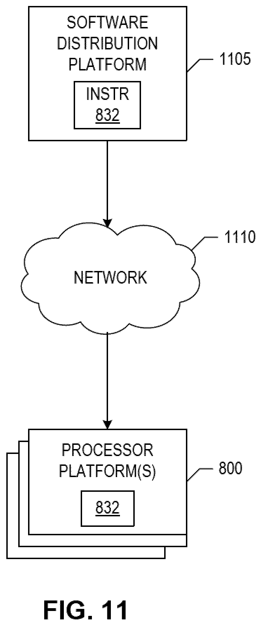

FIG. 11 is a block diagram of an example software/firmware/instructions distribution platform (e.g., one or more servers) to distribute software, instructions, and/or firmware (e.g., corresponding to the example machine readable instructions of FIGS. 4-7) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular.

### DETAILED DESCRIPTION

A campaign manager manages actions and operations performed for a plurality devices. For example, a campaign manager may be responsible for describing the logical alternatives, identifying the right action for each device, and keeping track of the multiple triggered actions. Variations of device parameters, tags applied for grouping formation, actions typing, and potential results (among other factors) incorporate additional complexity to the manageability scenario. In a complementary way, a campaign manager could be used for implementing validation strategies in controlled environments to collect initial knowledge on the partial result and how to use control data (e.g., logs, OS, networking, etc.). This knowledge can then be utilized to guide the global campaign implementation (e.g., Canary releases, A/B approaches, etc.). In many situations, conducting a fully comprehensive validation of campaigns and variations is expensive because of the high number of involved trade-offs and scenarios.

Methods and apparatus disclosed herein utilize an inductive approach to monitor the operations of campaigns, collect and store information about the campaigns and their results, and to leverage that information to provide recommendations to operations for future campaigns. An example recommender provides a recommendation mechanism for operators managing campaign definitions and implementations (e.g., in a fleet management system), to capitalize on previous experiences and knowledge. In some implementations, an operator can elect to cause the system to automatically take the recommended actions during predetermined timeslots while receiving notifications on the outcomes. In some examples, components of the system explore an inventory of devices, collect control data, and use previous execution results to characterize different environments. The characterized environments may be stored as scenarios where actions, such as update operations, could be implemented. In some examples, the system utilizes the detected scenarios for implementing operations and collects feedback based on results for recording the last known status, performance profile, and cost estimation per operation. This information may be organized as patterns in a knowledge database that feeds a recommender system. The recommender system will guide the campaign implementation and operation.

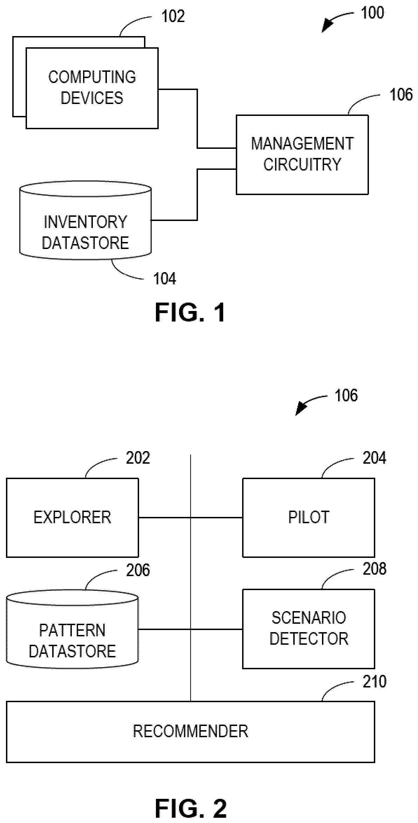

FIG. 1 is a block diagram of an example environment 100 in which an example management circuitry 106 operates to manage a plurality of computing devices 102.

The example environment 100 includes the example computing devices 102, an example inventory database 104, and the example management circuitry 106.

The example computing devices 102 are a plurality of computing devices. For example, the plurality of computing devices may be internet of things (IoT) devices that are each installed in a plurality of vehicles. Alternatively, the computing devices 102 may be any type of computing devices that are a part of a collective management system. For example, the computing devices may be one or more of a cluster, a cloud, an edge, a datacenter, an edge datacenter, etc. The computing devices may be any mix of real computing devices and virtual computing resources. For example, the computing devices may be personal computers, server computers, virtual machines, containers (e.g., containers managed by KUBERNETES^{®}, microservices, dynamically composed servers and/or platforms (e.g., an application executing in a container or multiple containers forming an edge service instance represented with their corresponding process address space ID (PASID)), scalable input/output virtualization (scalable IOV), etc. While a single group of computing devices 102 is shown in FIG. 1, the computing devices 102 may be any grouping(s) such as a hierarchical combination of devices that include any number of intermediate management systems.

The inventory datastore 104 is a database of information about the computing devices 102. The information may include identity information, capability information, network address information, device composition information (e.g., processor identity, memory size, storage size, computing device type, etc.), or any other information about the computing devices 102, a network connecting the computing devices 102, management of the computing devices, etc.

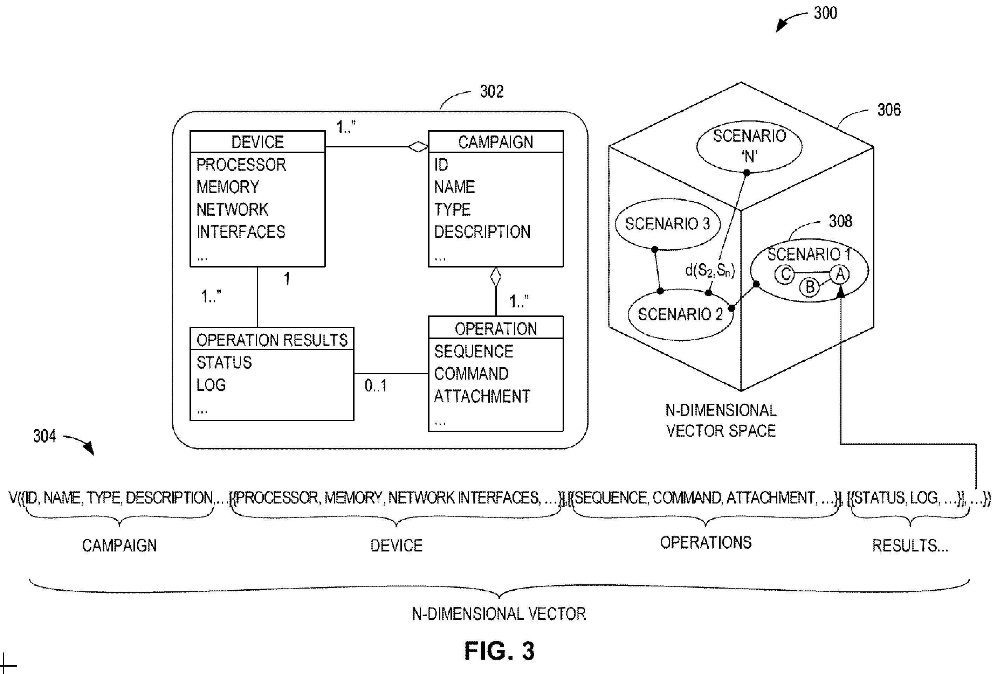

The example management circuitry 106 manages actions (e.g., which may be known as campaigns) performed on the computing devices 102. To facilitate such management, the example management circuitry 106 analyzes information about prior actions performed on the computing devices 102 and/or other computing devices to provide recommendations regarding the actions. For example, when an administrator is interested in performing a firmware update on the computing devices 102, the management circuitry 106 analyzes historical information to make recommendations regarding the firmware deployment. For example, the recommendations may include information about different approaches (e.g., serial deployment, parallel deployment, peer-to-peer distribution, etc.) and/or about expected results (e.g., likelihood of success, estimation of a number of failures, etc.). To analyze a current action and compare to historical actions, the information about an action is converted to a vector (e.g., as shown in FIG. 3). For example, a vector may include identifying information for a campaign, device identification and characteristic information, information about operations performed as part of the action, status information, result information, log information, etc. The management circuitry 106 analyzes the vectors in an N-dimensional vector space, where N is the number of parameters in the vector. The N-dimensional vector space is analyzed to identify vectors that are clustered with the vector space. The management circuitry 106 utilizes the distance between vectors as a measure of similarity.

The example management circuitry 106 is implemented by software executing on a computing device. Alternatively, the management circuitry 106 may be implemented by any combination of software and hardware. The example management circuitry 106 is described in further detail in conjunction with FIG. 2.

FIG. 2 is a block diagram of an example implementation of the management circuitry 106 of FIG. 1. The example management circuitry 106 of FIG. 2 includes an example explorer circuitry 202, an example pilot circuitry 204, an example pattern datastore 206, an example scenario detector circuitry 208, and an example recommender circuitry 210.

The management circuitry 106 of FIG. 2 may be instantiated (e.g., creating an instance of, bring into being for any length of time, materialize, implement, etc.) by programmable circuitry such as a Central Processor Unit (CPU) executing first instructions. Additionally or alternatively, the management circuitry 106 of FIG. 2 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIG. 2 may, thus, be instantiated at the same or different times. Some or all of the circuitry of FIG. 2 may be instantiated, for example, in one or more threads executing concurrently on hardware and/or in series on hardware. Moreover, in some examples, some or all of the circuitry of FIG. 2 may be implemented by microprocessor circuitry executing instructions and/or FPGA circuitry performing operations to implement one or more virtual machines and/or containers.

The example explorer circuitry 202 obtains metadata about the computing devices 102 and previous campaigns. For example, the explorer circuitry 202 gathers information about the computing devices 102 from the inventory datastore 104. The explorer circuitry 202 further gathers telemetry information that reflects the state(s) of the computing devices 102. For example, the explorer circuitry 202 may send a request to each of the computing devices 102 and obtain responses that include the telemetry data (e.g., in-band requests, out-of-band requests, etc.). The explorer circuitry 202 synthesizes the telemetry data with the device metadata and transmits the synthesized data to the example scenario detector 208.

In some examples, the explorer circuitry 202 is instantiated by programmable circuitry executing explorer instructions and/or configured to perform operations such as those represented by the flowchart(s) of FIG. 4.

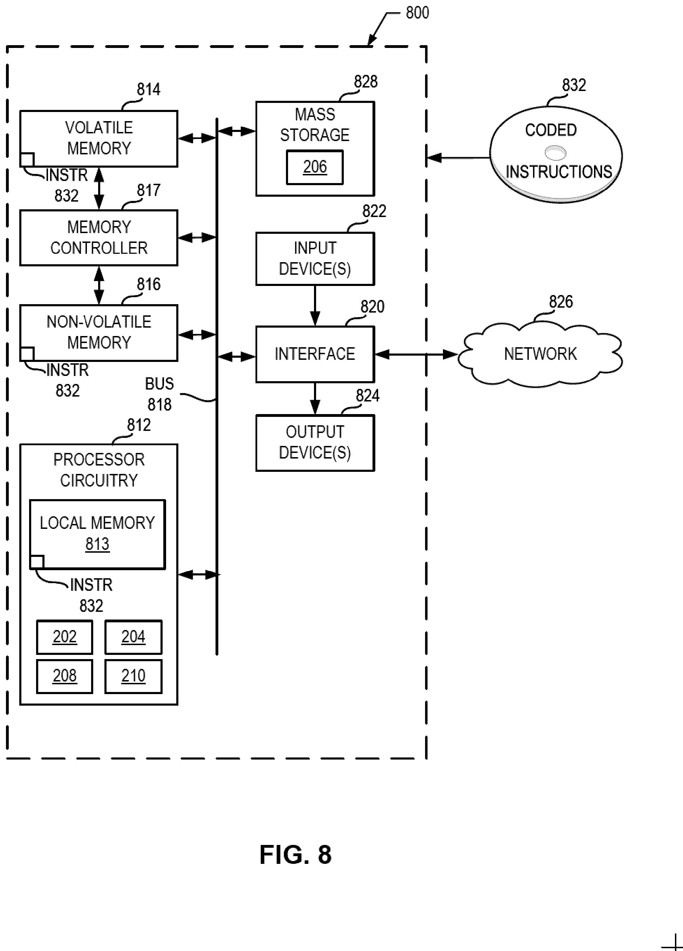

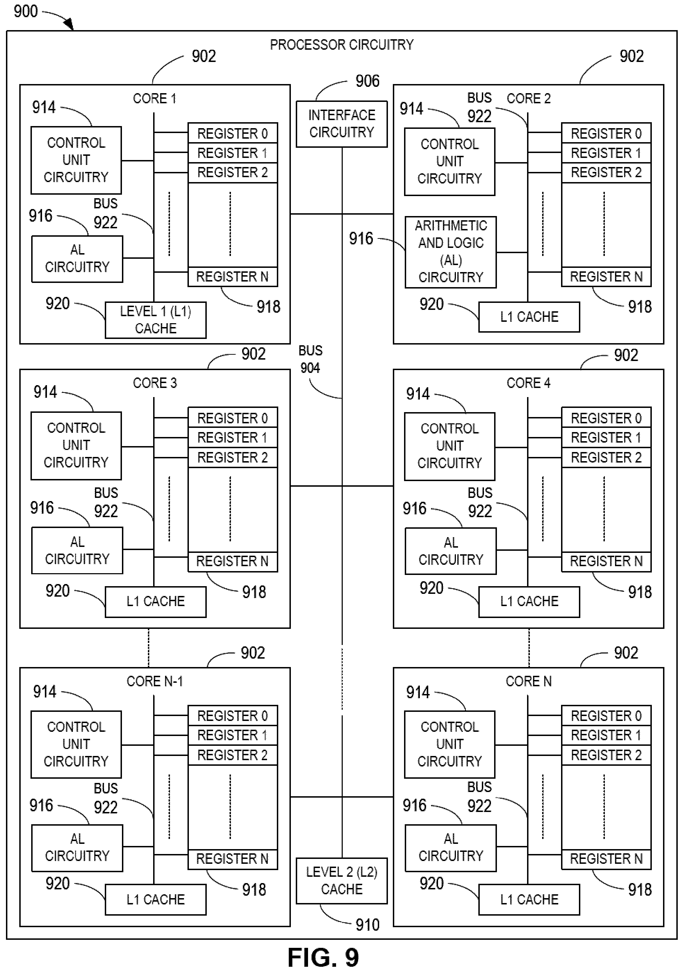

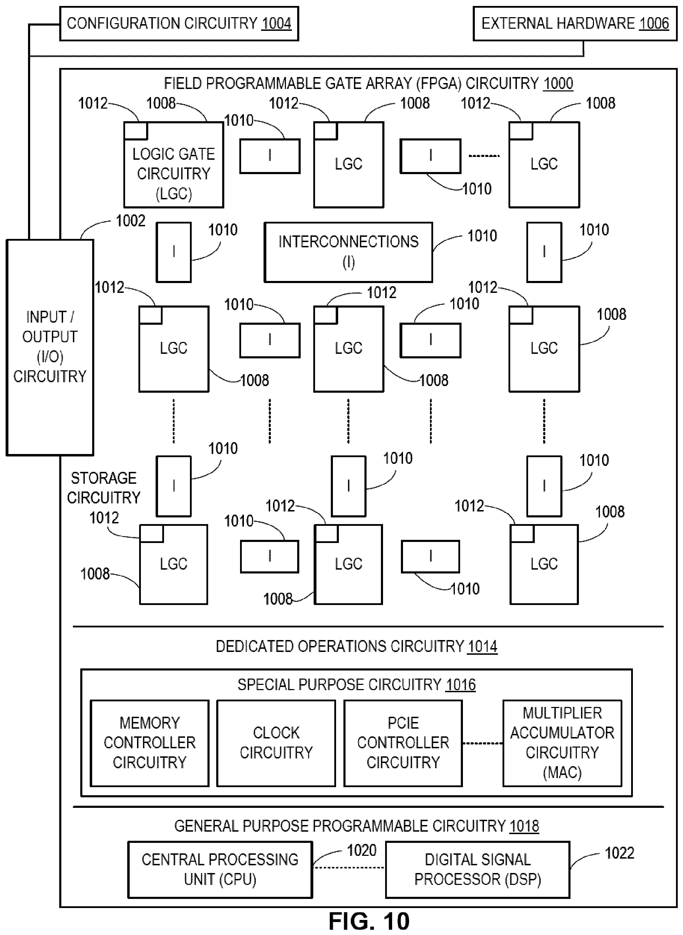

In some examples, the management circuitry 106 includes means for exploring. For example, the means for exploring may be implemented by explorer circuitry 202. In some examples, the explorer circuitry 202 may be instantiated by programmable circuitry such as the example programmable circuitry 812 of FIG. 8. For instance, the explorer circuitry 202 may be instantiated by the example microprocessor 900 of FIG. 9 executing machine executable instructions such as those implemented by at least blocks 402-416 of FIG. 4. In some examples, explorer circuitry 202 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the explorer circuitry 202may be instantiated by any other combination of hardware, software, and/or firmware. For example, the explorer circuitry 202may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example pilot circuitry 204 identifies prior actions that are comparable to a currently proposed action. For example, a current action and its parameters, operations, etc. may be identified by an administrator and the pilot circuitry 204 filters prior actions to identify historical actions comparable to the current action. The example pilot circuitry 204 obtains the historical actions from the example pattern datastore 206. The example pilot circuitry 204 utilizes distances in an N-dimensional space between the current action and historical actions to filter and score historical actions. For example, historical actions that are greater than a threshold distance from the current action may be filtered out and then actions that are not filtered out may be scored based on their distance from the current action. The pilot circuitry 204 provides the resulting actions and scoring to the recommender circuitry 210 for providing a recommendation (e.g., to a user/administrator attempting to perform an action).

While the example pilot circuitry 204 utilizes distances for filtering and scoring, other approaches may be utilized. For example, artificial intelligence and machine learning approaches may be utilized to identify historical actions that are similar to the current action.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, a reinforcement learning model may be used. Using a reinforcement learning model enables a model to be trained regarding actions that result in greater likelihood of success (e.g., guides a recommendation to an approach to performing an action that results in a higher likelihood of success and/or lower likelihood of errors). In general, machine learning models/architectures that are suitable to use in the example approaches disclosed herein will be models/architectures that can be trained based on historical actions and situations. However, other types of machine learning models could additionally or alternatively be used such as clustering models, neural networks. etc.

In general, implementing a supervised ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process. For example, a machine learning model may be trained on historical actions, their results, information about the computing devices on which the actions were performed, etc. and the trained model may be utilized to characterize a new action. Unsupervised ML/AI techniques like pattern detection or rule association could complement the training/learning process.

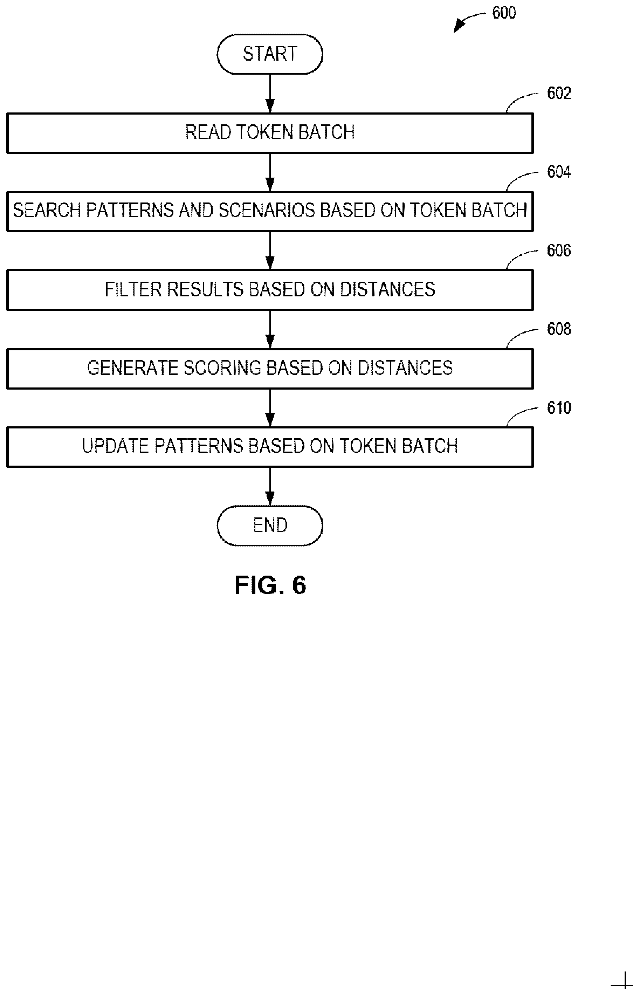

In some examples, the pilot circuitry 204 is instantiated by programmable circuitry executing explorer instructions and/or configured to perform operations such as those represented by the flowchart(s) of FIG. 6.

In some examples, the management circuitry 106 includes means for piloting. For example, the means for piloting may be implemented by pilot circuitry 204. In some examples, the pilot circuitry 204 may be instantiated by programmable circuitry such as the example programmable circuitry 812 of FIG. 8. For instance, the pilot circuitry 204 may be instantiated by the example microprocessor 900 of FIG. 9 executing machine executable instructions such as those implemented by at least blocks 402-416 of FIG. 4. In some examples, pilot circuitry 204 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the pilot circuitry 204may be instantiated by any other combination of hardware, software, and/or firmware. For example, the pilot circuitry 204may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example scenario detector 208 groups ones of the computing devices 102 utilizing density-based clustering. In particular, the scenario detector 208 obtains telemetry data and computing device metadata from the explorer circuitry 202 and analyzes the information to characterize device features and behavior and environmental features. The example scenario detector 208 converts the information into a vector representation (e.g., a vector representation as described in conjunction with FIG. 3) and groups vectors based on distances to identify scenarios. A scenario is a grouping of actions that are similar (e.g., clustered together in the N-dimensional space of the identified vectors). The information about scenarios, patterns detected, and distances is stored in the example pattern datastore 206.

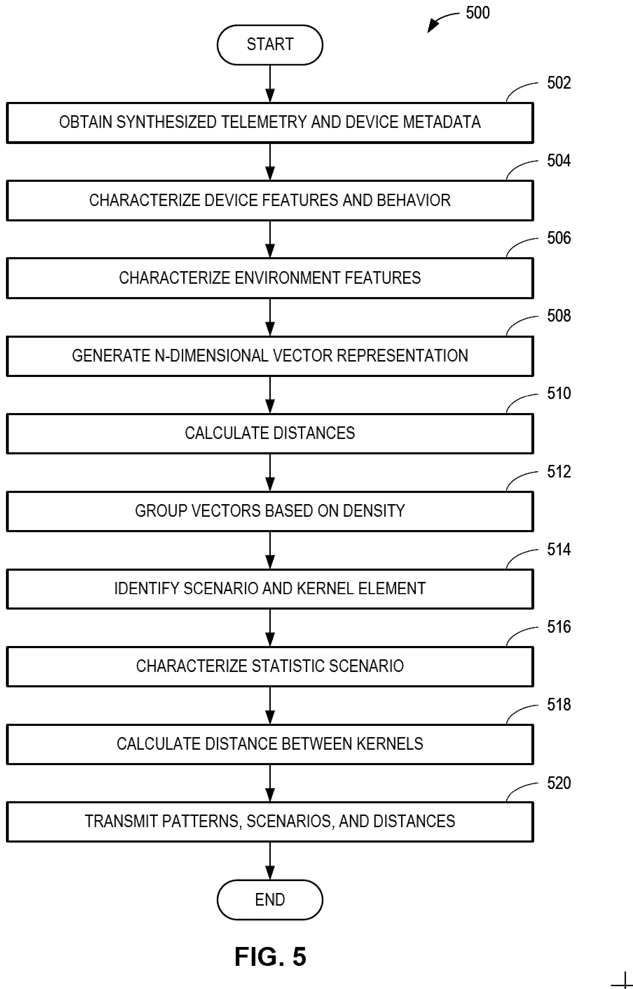

In some examples, the scenario detector 208 is instantiated by programmable circuitry executing explorer instructions and/or configured to perform operations such as those represented by the flowchart(s) of FIG. 5.

In some examples, the management circuitry 106 includes means for scenario detection. For example, the means for scenario detection may be implemented by scenario detector 208. In some examples, the scenario detector 208 may be instantiated by programmable circuitry such as the example programmable circuitry 812 of FIG. 8. For instance, the scenario detector 208 may be instantiated by the example microprocessor 900 of FIG. 9 executing machine executable instructions such as those implemented by at least blocks 402-416 of FIG. 4. In some examples, scenario detector 208 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the scenario detector 208may be instantiated by any other combination of hardware, software, and/or firmware. For example, the scenario detector 208 may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

The example recommender circuity 210 obtains a description of a new action (e.g., a campaign) to be performed and converts the action to a vector (e.g., converts parameters such as device information, operation information, action information, etc.). The recommender circuitry 210 obtains scoring and pattern information for historical actions from the pattern datastore 206 and identifies recommendations based on the retrieved information. For example, the recommender circuitry 210 presents recommendations ordered based on the distances calculated from the new action to identified historical actions.

In addition to providing recommendations, the example recommender circuitry 210 monitors the performance of the actions during execution. Information collected about the execution can be stored and used as feedback to the management circuitry 210 for future actions. Additionally or alternatively, information collected during execution of an action may be utilized to make changes during the execution. For example, if multiple failures are detected during execution of the action, the recommendations originally identified may be presented for the user/administrator to choose a different recommendation (e.g., may select a second recommendation if the highest ranked recommendation is resulting in multiple failures). The recommender circuitry 210 stores information collected during execution of an action in the inventory datastore 104.

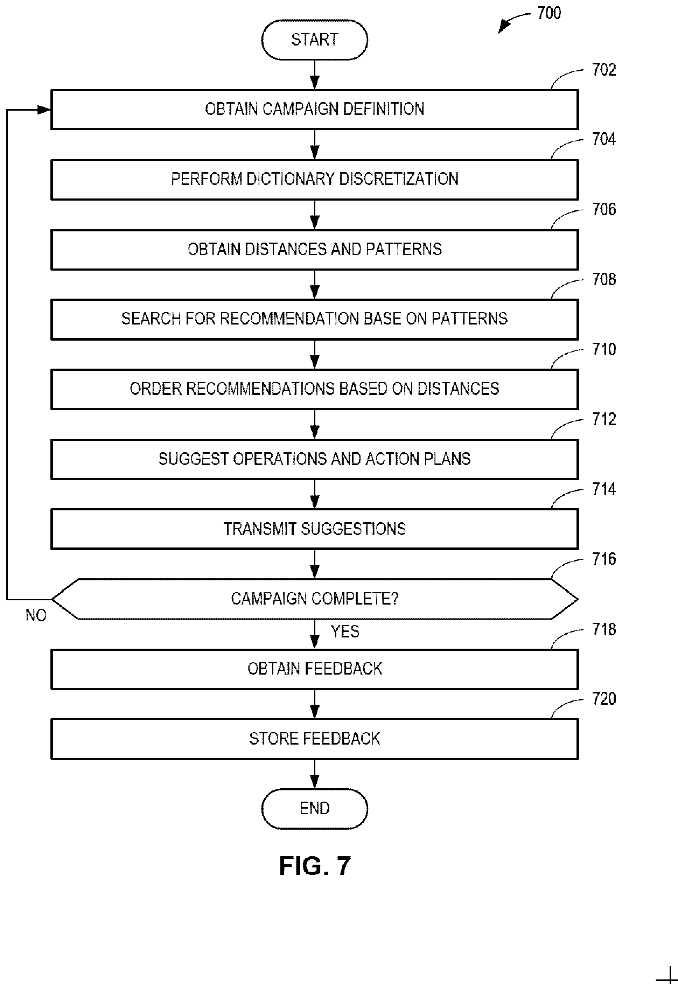

In some examples, the recommender circuitry 210 is instantiated by programmable circuitry executing explorer instructions and/or configured to perform operations such as those represented by the flowchart(s) of FIG. 7.

In some examples, the management circuitry 106 includes means for recommending. For example, the means for recommending may be implemented by recommender circuitry 210. In some examples, the recommender circuitry 210 may be instantiated by programmable circuitry such as the example programmable circuitry 812 of FIG. 8. For instance, the recommender circuitry 210 may be instantiated by the example microprocessor 900 of FIG. 9 executing machine executable instructions such as those implemented by at least blocks 402-416 of FIG. 4. In some examples, recommender circuitry 210 may be instantiated by hardware logic circuitry, which may be implemented by an ASIC, XPU, or the FPGA circuitry 1000 of FIG. 10 configured and/or structured to perform operations corresponding to the machine readable instructions. Additionally or alternatively, the recommender circuitry 210may be instantiated by any other combination of hardware, software, and/or firmware. For example, the recommender circuitry 210may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the management circuitry of FIG. 1 is illustrated in FIG. 2, one or more of the elements, processes, and/or devices illustrated in FIG. 2 may be combined, divided, re-arranged, omitted, eliminated, and/or implemented in any other way. Further, the example explorer 202, the example pilot 204, the example scenario detector 208, and/or, more generally, the example management circuitry 106 of FIG. 2, may be implemented by hardware alone or by hardware in combination with software and/or firmware. Thus, for example, any of the example explorer 202, the example pilot 204, the example scenario detector 208, and/or, more generally, the example management circuitry 106 of FIG. 2, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example management circuitry of FIG. 2 may include one or more elements, processes, and/or devices in addition to, or instead of, those illustrated in FIG. 2, and/or may include more than one of any or all of the illustrated elements, processes and devices.

Flowchart(s) representative of example machine readable instructions, which may be executed by programmable circuitry to implement and/or instantiate the management circuitry of FIG. 2 and/or representative of example operations which may be performed by programmable circuitry to implement and/or instantiate the management circuitry of FIG. 2, are shown in FIGS. 4-7. The machine readable instructions may be one or more executable programs or portion(s) of one or more executable programs for execution by programmable circuitry such as the programmable circuitry 812 shown in the example processor platform 800 discussed below in connection with FIG. 8 and/or may be one or more function(s) or portion(s) of functions to be performed by the example programmable circuitry (e.g., an FPGA) discussed below in connection with FIGS. 9 and/or 10. In some examples, the machine readable instructions cause an operation, a task, etc., to be carried out and/or performed in an automated manner in the real world. As used herein, "automated" means without human involvement.

The program may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 4-7, many other methods of implementing the example management circuitry may alternatively be used. For example, the order of execution of the blocks of the flowchart(s) may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.) or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4-7 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/ or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

FIG. 3 is a block diagram of an example layout 300 of data utilized by the management circuitry 106 of FIG 2.

An example representation of data that may be part of an action is shown in block 302. The example action in block 302 includes device information (e.g., processor information, memory information, network information, interface information, etc.), campaign information (e.g., campaign identifier, campaign name, campaign type, campaign description, etc.), operation information (e.g., identification of a sequence, command information, attachment information, etc.), and operation results (e.g., operation status, operation log information, etc.).

An example vector 304 illustrates how the data shown in block 302 may be converted to a vector. The example vector 304 includes components for each of the campaign information, the device information, the operation information, and the results information.

An example N-dimensional space 306 illustrates an example of representing the N-dimensional vector in an N-dimensional space. The example N-dimensional space 306 includes an example scenario 308 that includes the example vector 304 (e.g., illustrated as element A of Scenario 1). For example, a scenario may be a cluster of action vectors that are similar (e.g., clustered together in the N-dimensional space 306). As shown in the example N-dimensional space 306 a distance between scenarios may be calculated (e.g., *d*(*S*₂, *Sₙ*) is the distance between Scenario 2 and Scenario N).

FIG. 4 is a flowchart representative of example machine readable instructions and/or example operations 400 that may be executed, instantiated, and/or performed by programmable circuitry to explore the computing devices 102 documented in the inventory datastore 104 and the environment in which they operate. The example machine-readable instructions and/or the example operations 400 of FIG. 4 begin at block 402, at which the explorer circuitry 202 obtains pattern information from the example pattern datastore 206. The pattern information retrieved includes information about prior actions performed in the environment. The explorer circuitry 202 further extracts device and control information about the computing devices 102 from the inventory datastore 104 (block 404). The explorer circuitry 202 then reads information about the computing devices 102 from the device and control information (block 406). For example, the explorer circuitry 202 may determine identities, capabilities, resources, etc. of the computing devices 102. The explorer circuitry 202 then analyzes the previous actions (e.g., campaigns) and results (block 408). For example, the explorer circuitry 202 may determine a list of campaigns performed on the same computing devices 102, on similar computing devices, within the same environment, etc.

The explorer circuitry 202 then checks the availability of the computing devices (block 410). For example, the explorer circuitry 202 may determine a state (e.g., online, offline, powered on, powered off, etc.) for each of the computing devices 102. The explorer circuitry 202 further gathers telemetry data from the computing devices 102 (block 412). For example, the telemetry data may include information about resource utilization levels, connection speeds, latency, bandwidth characteristics, etc. The explorer circuitry 202 then synthesizes the telemetry data with the information collected about the computing devices 102 (block 414). For example, the explorer circuitry 202 may generate a table of data that includes fields for device characteristics and telemetry data where each row in the table corresponds to one of the computing devices 102 and, thus, links the telemetry data with information about the respective computing device. The explorer circuitry 202 transmits the synthesized telemetry and device metadata to the example scenario detector 208 (block 416).

FIG. 5 is a flowchart representative of example machine readable instructions and/or example operations 500 that may be executed, instantiated, and/or performed by programmable circuitry to detect and analyze scenarios associated with actions to be performed on the computing devices 102. The example machine-readable instructions and/or the example operations 500 of FIG. 5 begin at block 502 when the scenario detector 208 obtained the synthesized telemetry data and device metadata from the explorer circuitry 202. The example scenario detector 208 characteristics device features and behaviors (block 502). The scenario detector 208 also characteristics environment features (block 504). For example, the scenario detector 208 may convert device features and behaviors and environment features into parameter values that can be utilized in a vector. In some examples, the scenario detector 208 utilizes look-up-tables, translation tables, text conversion tools, etc. For example, a lookup table may be applied to device processor characteristics to convert processor types into numeric values (e.g., a first processor type may be a 1, a second processor type may be a 2, etc.).

The scenario detector 208 generates an N-dimensional vector representation of the environment, computing devices, and actions (block 508). N is the number of parameters or characteristics that have been collected to represent the devices and environment. The scenario detector 208 compares the vectors generated for a system to calculate distances among the vectors (block 510). Based on the distances, the scenario detector 208 groups the vectors (block 512). For example, the vectors may be grouped based on density analysis, cluster algorithms (e.g., K-means clustering), machine learning analysis, etc.

Once groupings of vectors have been identified in an N-dimension space, scenarios and kernel elements for the scenario are identified by the scenario detector (block 514). For example, the scenario detector 208 may determine a scenario for each cluster of vectors identified in block 512. The scenario detector 208 determines statistics for each scenario (block 516). For example, the dimensions, mean, center, etc. of the scenario in the N-dimension space may be calculated. The scenario detector 208 then calculates the distances between the kernels of the identified clusters (block 518).

The scenario detector 208 transits the results of the analysis to the pattern datastore 206 (block 520). For example, an identification of the scenarios and their statistics and distances can be stored in the pattern datastore for access by the pilot circuitry 204 and the recommender circuitry 210.

FIG. 6 is a flowchart representative of example machine readable instructions and/or example operations 600 that may be executed, instantiated, and/or performed by programmable circuitry to implement and collect comparable action results. The example machine-readable instructions and/or the example operations 600 of FIG. 6 begin at block 602 in which the example pilot circuitry 204 reads a token batch from the computing devices 102. The example pilot circuitry 204 then searches the patterns and scenarios in the example pattern datastore 206 based on the token batch (block 604). The example pilot circuitry 204 filters the search results based on distances between the resulting vectors and the action to be performed (block 606). For example, the pilot circuitry 204 may filter the results to exclude distances that exceed a threshold, may select the top results (e.g., top 5 results), etc. The pilot circuitry 204 determines scores for the selected results based on the distances (block 608). The pilot circuitry 204 then stores the scored patterns and token batch in the pattern datastore 206 for access by the recommender circuitry 210 (block 610).

FIG. 7 is a flowchart representative of example machine readable instructions and/or example operations 700 that may be executed, instantiated, and/or performed by programmable circuitry to provide and monitor recommendations for actions to be performed on the computing devices 102. The example machine-readable instructions and/or the example operations 700 of FIG. 7 begin at block 702 when the recommender circuitry 210 obtains an action (e.g., a campaign) definition from a user/administrator. For example, the recommendation circuitry 210 may present a user interface in which a campaign may be input (e.g., campaign identification information, information about devices, information about operations to be performed as part of the action, etc.). The recommender circuitry 210 performs dictionary discretization of the campaign input (block 704). For example, the recommender circuitry 210 may determine parameter values to be assigned to the user inputs (e.g., using a look-up-table, dictionary, etc.). The example recommender circuitry 210 retrieves distance and patterns from the example pattern datastore 206 (block 706). The recommender circuitry 210 searches the patterns for recommendations based on the user input and the retrieved patterns (block 708) and orders the recommendations based on the distances between the input campaign and the retrieved patterns (block 710). In some examples, the recommender circuitry 210 may consider additional factors beyond the distance. For example, the recommender circuitry 210 may consider whether a retrieved pattern meets a service level agreement (SLA) and/or objective (SLO) identified by a user and/or system, whether a retrieved pattern meets privacy and/or security requirements identified by a user and/or system, whether a retrieved pattern meets preferences identified by the user and/or the system (e.g., performance preferences, bandwidth preferences, power preferences, etc.), and/or other considerations. The recommender circuitry 210 may determine whether such characteristics are met based on the specified characteristics in a pattern and/or based on a historical indication of whether such characteristics were met during a historical performance of an action/campaign.

The recommender circuitry 210 then presents the recommendations and action plans (block 712). Once a recommendation has been selected and enacted by the user, the recommender circuitry 210 monitors the operation and presents suggestions (block 714). For example, the recommender circuitry 210 may detect a failure rate, an error rate, an operation speed, etc. and based on such detections may provide a new recommendation (e.g., a next highest scoring recommendation). The recommender circuitry 210 may continue to iterate through providing recommendations and analyzing the operation while the campaign is not completed (block 716).

When the campaign is complete (block 716), the recommender circuitry 210 obtains feedback regarding the performance of the campaign (block 718). For example, the recommender circuitry 210 may present a user interface in which the user can provide a ranking (e.g., from 1 to 10), provide an indication of a result (e.g., success or failure), provide notes or suggestions, etc. The recommender circuitry 210 stores the feedback information in connection with the action history in the inventory datastore 104 for use in analyzing future actions (block 720)

FIG. 8 is a block diagram of an example programmable circuitry platform 800 structured to execute and/or instantiate the example machine-readable instructions and/or the example operations of FIGS. 4-7 to implement the management circuitry of FIG. 2. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing and/or electronic device.

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, neural processing units (NPU), artificial intelligence (AI) accelerators, tensor processing units (TPUs), inference engines, matrix math units, matrix math unit (MMU), and/or microcontrollers from any desired family or manufacturer. The programmable circuitry 812 may be implemented by one or more semiconductor based (e.g., silicon based) devices. In this example, the programmable circuitry 812 implements the explorer circuitry 202, the pilot circuitry 204, the scenario detector circuitry 208, and the recommender circuitry 210.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCIe) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs. The example mass storage device 828 includes the pattern datastore 206.

The machine readable instructions 832, which may be implemented by the machine readable instructions of FIGS. 4-7, may be stored in the mass storage device 828, in the volatile memory 814, in the non-volatile memory 816, and/or on at least one non-transitory computer readable storage medium such as a CD or DVD which may be removable.

FIG. 9 is a block diagram of an example implementation of the programmable circuitry 812 of FIG. 8. In this example, the programmable circuitry 812 of FIG. 8 is implemented by a microprocessor 900. For example, the microprocessor 900 may be a general-purpose microprocessor (e.g., general-purpose microprocessor circuitry). The microprocessor 900 executes some or all of the machine-readable instructions of the flowcharts of FIGS. 4-7 to effectively instantiate the circuitry of FIG. 2 as logic circuits to perform operations corresponding to those machine readable instructions. In some such examples, the circuitry of FIG. 2 is instantiated by the hardware circuits of the microprocessor 900 in combination with the machine-readable instructions. For example, the microprocessor 900 may be implemented by multi-core hardware circuitry such as a CPU, a DSP, a GPU, an XPU, etc. Although it may include any number of example cores 902 (e.g., 1 core), the microprocessor 900 of this example is a multi-core semiconductor device including N cores. The cores 902 of the microprocessor 900 may operate independently or may cooperate to execute machine readable instructions. For example, machine code corresponding to a firmware program, an embedded software program, or a software program may be executed by one of the cores 902 or may be executed by multiple ones of the cores 902 at the same or different times. In some examples, the machine code corresponding to the firmware program, the embedded software program, or the software program is split into threads and executed in parallel by two or more of the cores 902. The software program may correspond to a portion or all of the machine readable instructions and/or operations represented by the flowcharts of FIGS. 4-7.

The cores 902 may communicate by a first example bus 904. In some examples, the first bus 904 may be implemented by a communication bus to effectuate communication associated with one(s) of the cores 902. For example, the first bus 904 may be implemented by at least one of an Inter-Integrated Circuit (I2C) bus, a Serial Peripheral Interface (SPI) bus, a PCI bus, or a PCIe bus. Additionally or alternatively, the first bus 904 may be implemented by any other type of computing or electrical bus. The cores 902 may obtain data, instructions, and/or signals from one or more external devices by example interface circuitry 906. The cores 902 may output data, instructions, and/or signals to the one or more external devices by the interface circuitry 906. Although the cores 902 of this example include example local memory 920 (e.g., Level 1 (L1) cache that may be split into an L1 data cache and an L1 instruction cache), the microprocessor 900 also includes example shared memory 910 that may be shared by the cores (e.g., Level 2 (L2 cache)) for high-speed access to data and/or instructions. Data and/or instructions may be transferred (e.g., shared) by writing to and/or reading from the shared memory 910. The local memory 920 of each of the cores 902 and the shared memory 910 may be part of a hierarchy of storage devices including multiple levels of cache memory and the main memory (e.g., the main memory 814, 816 of FIG. 8). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 902 may be referred to as a CPU, DSP, GPU, etc., or any other type of hardware circuitry. Each core 902 includes control unit circuitry 914, arithmetic and logic (AL) circuitry (sometimes referred to as an ALU) 916, a plurality of registers 918, the local memory 920, and a second example bus 922. Other structures may be present. For example, each core 902 may include vector unit circuitry, single instruction multiple data (SIMD) unit circuitry, load/store unit (LSU) circuitry, branch/jump unit circuitry, floating-point unit (FPU) circuitry, etc. The control unit circuitry 914 includes semiconductor-based circuits structured to control (e.g., coordinate) data movement within the corresponding core 902. The AL circuitry 916 includes semiconductor-based circuits structured to perform one or more mathematic and/or logic operations on the data within the corresponding core 902. The AL circuitry 916 of some examples performs integer based operations. In other examples, the AL circuitry 916 also performs floating-point operations. In yet other examples, the AL circuitry 916 may include first AL circuitry that performs integer-based operations and second AL circuitry that performs floating-point operations. In some examples, the AL circuitry 916 may be referred to as an Arithmetic Logic Unit (ALU).

The registers 918 are semiconductor-based structures to store data and/or instructions such as results of one or more of the operations performed by the AL circuitry 916 of the corresponding core 902. For example, the registers 918 may include vector register(s), SIMD register(s), general-purpose register(s), flag register(s), segment register(s), machine-specific register(s), instruction pointer register(s), control register(s), debug register(s), memory management register(s), machine check register(s), etc. The registers 918 may be arranged in a bank as shown in FIG. 9. Alternatively, the registers 918 may be organized in any other arrangement, format, or structure, such as by being distributed throughout the core 902 to shorten access time. The second bus 922 may be implemented by at least one of an I2C bus, a SPI bus, a PCI bus, or a PCIe bus.

Each core 902 and/or, more generally, the microprocessor 900 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 900 is a semiconductor device fabricated to include many transistors interconnected to implement the structures described above in one or more integrated circuits (ICs) contained in one or more packages.

The microprocessor 900 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 900, in the same chip package as the microprocessor 900 and/or in one or more separate packages from the microprocessor 900.

FIG. 10 is a block diagram of another example implementation of the programmable circuitry 812 of FIG. 8. In this example, the programmable circuitry 812 is implemented by FPGA circuitry 1000. For example, the FPGA circuitry 1000 may be implemented by an FPGA. The FPGA circuitry 1000 can be used, for example, to perform operations that could otherwise be performed by the example microprocessor 900 of FIG. 9 executing corresponding machine readable instructions. However, once configured, the FPGA circuitry 1000 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 900 of FIG. 9 described above (which is a general purpose device that may be programmed to execute some or all of the machine readable instructions represented by the flowchart(s) of FIGS. 4-7 but whose interconnections and logic circuitry are fixed once fabricated), the FPGA circuitry 1000 of the example of FIG. 10 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 4-7. In particular, the FPGA circuitry 1000 may be thought of as an array of logic gates, interconnections, and switches. The switches can be programmed to change how the logic gates are interconnected by the interconnections, effectively forming one or more dedicated logic circuits (unless and until the FPGA circuitry 1000 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 4-7. As such, the FPGA circuitry 1000 may be configured and/or structured to effectively instantiate some or all of the operations/functions corresponding to the machine readable instructions of the flowchart(s) of FIGS. 4-7 as dedicated logic circuits to perform the operations/functions corresponding to those software instructions in a dedicated manner analogous to an ASIC. Therefore, the FPGA circuitry 1000 may perform the operations/functions corresponding to the some or all of the machine readable instructions of FIGS. 4-7 faster than the general-purpose microprocessor can execute the same.

In the example of FIG. 10, the FPGA circuitry 1000 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1000 of FIG. 10 may access and/or load the binary file to cause the FPGA circuitry 1000 of FIG. 10 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1000 of FIG. 10 to cause configuration and/or structuring of the FPGA circuitry 1000 of FIG. 10, or portion(s) thereof.

The FPGA circuitry 1000 of FIG. 10, includes example input/output (I/O) circuitry 1002 to obtain and/or output data to/from example configuration circuitry 1004 and/or external hardware 1006. For example, the configuration circuitry 1004 may be implemented by interface circuitry that may obtain a binary file, which may be implemented by a bit stream, data, and/or machine-readable instructions, to configure the FPGA circuitry 1000, or portion(s) thereof. In some such examples, the configuration circuitry 1004 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1006 may be implemented by external hardware circuitry. For example, the external hardware 1006 may be implemented by the microprocessor 900 of FIG. 9.

The FPGA circuitry 1000 also includes an array of example logic gate circuitry 1008, a plurality of example configurable interconnections 1010, and example storage circuitry 1012. The logic gate circuitry 1008 and the configurable interconnections 1010 are configurable to instantiate one or more operations/functions that may correspond to at least some of the machine readable instructions of FIGS. 4-7 and/or other desired operations. The logic gate circuitry 1008 shown in FIG. 10 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1008 to enable configuration of the electrical structures and/or the logic gates to form circuits to perform desired operations/functions. The logic gate circuitry 1008 may include other electrical structures such as look-up tables (LUTs), registers (e.g., flip-flops or latches), multiplexers, etc.

The configurable interconnections 1010 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1008 to program desired logic circuits.

The storage circuitry 1012 of the illustrated example is structured to store result(s) of the one or more of the operations performed by corresponding logic gates. The storage circuitry 1012 may be implemented by registers or the like. In the illustrated example, the storage circuitry 1012 is distributed amongst the logic gate circuitry 1008 to facilitate access and increase execution speed.

The example FPGA circuitry 1000 of FIG. 10 also includes example dedicated operations circuitry 1014. In this example, the dedicated operations circuitry 1014 includes special purpose circuitry 1016 that may be invoked to implement commonly used functions to avoid the need to program those functions in the field. Examples of such special purpose circuitry 1016 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1000 may also include example general purpose programmable circuitry 1018 such as an example CPU 1020 and/or an example DSP 1022. Other general purpose programmable circuitry 1018 may additionally or alternatively be present such as a GPU, an XPU, etc., that can be programmed to perform other operations.

Although FIGS. 9 and 10 illustrate two example implementations of the programmable circuitry 812 of FIG. 8, many other approaches are contemplated. For example, FPGA circuitry may include an on-board CPU, such as one or more of the example CPU 1020 of FIG. 9. Therefore, the programmable circuitry 812 of FIG. 8 may additionally be implemented by combining at least the example microprocessor 900 of FIG. 9 and the example FPGA circuitry 1000 of FIG. 10. In some such hybrid examples, one or more cores 902 of FIG. 9 may execute a first portion of the machine readable instructions represented by the flowchart(s) of FIGS. 4-7 to perform first operation(s)/function(s), the FPGA circuitry 1000 of FIG. 10 may be configured and/or structured to perform second operation(s)/function(s) corresponding to a second portion of the machine readable instructions represented by the flowcharts of FIG. 4-7, and/or an ASIC may be configured and/or structured to perform third operation(s)/function(s) corresponding to a third portion of the machine readable instructions represented by the flowcharts of FIGS. 4-7.

It should be understood that some or all of the circuitry of FIG. 2 may, thus, be instantiated at the same or different times. For example, same and/or different portion(s) of the microprocessor 900 of FIG. 9 may be programmed to execute portion(s) of machine-readable instructions at the same and/or different times. In some examples, same and/or different portion(s) of the FPGA circuitry 1000 of FIG. 10 may be configured and/or structured to perform operations/functions corresponding to portion(s) of machine-readable instructions at the same and/or different times.

In some examples, some or all of the circuitry of FIG. 2 may be instantiated, for example, in one or more threads executing concurrently and/or in series. For example, the microprocessor 900 of FIG. 9 may execute machine readable instructions in one or more threads executing concurrently and/or in series. In some examples, the FPGA circuitry 1000 of FIG. 10 may be configured and/or structured to carry out operations/functions concurrently and/or in series. Moreover, in some examples, some or all of the circuitry of FIG. 2 may be implemented within one or more virtual machines and/or containers executing on the microprocessor 900 of FIG. 9.

In some examples, the programmable circuitry 812 of FIG. 8 may be in one or more packages. For example, the microprocessor 900 of FIG. 9 and/or the FPGA circuitry 1000 of FIG. 10 may be in one or more packages. In some examples, an XPU may be implemented by the programmable circuitry 812 of FIG. 8, which may be in one or more packages. For example, the XPU may include a CPU (e.g., the microprocessor 900 of FIG. 9, the CPU 1020 of FIG. 10, etc.) in one package, a DSP (e.g., the DSP 1022 of FIG. 10) in another package, a GPU in yet another package, and an FPGA (e.g., the FPGA circuitry 1000 of FIG. 10) in still yet another package.

A block diagram illustrating an example software distribution platform 1105 to distribute software such as the example machine readable instructions 832 of FIG. 8 to other hardware devices (e.g., hardware devices owned and/or operated by third parties from the owner and/or operator of the software distribution platform) is illustrated in FIG. 11. The example software distribution platform 1105 may be implemented by any computer server, data facility, cloud service, etc., capable of storing and transmitting software to other computing devices. The third parties may be customers of the entity owning and/or operating the software distribution platform 1105. For example, the entity that owns and/or operates the software distribution platform 1105 may be a developer, a seller, and/or a licensor of software such as the example machine readable instructions 832 of FIG. 8. The third parties may be consumers, users, retailers, OEMs, etc., who purchase and/or license the software for use and/or re-sale and/or sub-licensing. In the illustrated example, the software distribution platform 1105 includes one or more servers and one or more storage devices. The storage devices store the machine readable instructions 832, which may correspond to the example machine readable instructions of FIGS. 4-7, as described above. The one or more servers of the example software distribution platform 1105 are in communication with an example network 1110, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 832 from the software distribution platform 1105. For example, the software, which may correspond to the example machine readable instructions of FIG. 4-7, may be downloaded to the example programmable circuitry platform 800, which is to execute the machine readable instructions 832 to implement the management circuitry. In some examples, one or more servers of the software distribution platform 1105 periodically offer, transmit, and/or force updates to the software (e.g., the example machine readable instructions 832 of FIG. 8) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

Notwithstanding the foregoing, in the case of referencing a semiconductor device (e.g., a transistor), a semiconductor die containing a semiconductor device, and/or an integrated circuit (IC) package containing a semiconductor die during fabrication or manufacturing, "above" is not with reference to Earth, but instead is with reference to an underlying substrate on which relevant components are fabricated, assembled, mounted, supported, or otherwise provided. Thus, as used herein and unless otherwise stated or implied from the context, a first component within a semiconductor die (e.g., a transistor or other semiconductor device) is "above" a second component within the semiconductor die when the first component is farther away from a substrate (e.g., a semiconductor wafer) during fabrication/manufacturing than the second component on which the two components are fabricated or otherwise provided. Similarly, unless otherwise stated or implied from the context, a first component within an IC package (e.g., a semiconductor die) is "above" a second component within the IC package during fabrication when the first component is farther away from a printed circuit board (PCB) to which the IC package is to be mounted or attached. It is to be understood that semiconductor devices are often used in orientation different than their orientation during fabrication. Thus, when referring to a semiconductor device (e.g., a transistor), a semiconductor die containing a semiconductor device, and/or an integrated circuit (IC) package containing a semiconductor die during use, the definition of "above" in the preceding paragraph (i.e., the term "above" describes the relationship of two parts relative to Earth) will likely govern based on the usage context.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that provide improved systems for facilitating the performance of actions on multiple computing devices (e.g., a fleet of computing devices). Disclosed systems, apparatus, articles of manufacture, and methods improve the efficiency of using a computing device by facilitating effective deployment of actions based on analysis of historical action deployment. Disclosed systems, apparatus, articles of manufacture, and methods are accordingly directed to one or more improvement(s) in the operation of a machine such as a computer or other electronic and/or mechanical device.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

## Claims

1. A method comprising:
determining a first cluster of actions and a second cluster of actions of a plurality of prior actions;
determining a distance between the first cluster and the second cluster;
determining an action to be performed for a plurality of computing devices based on the distance, the action includes information that identifies the computing devices and an operation to be performed on the computing devices;
comparing the action with a plurality of prior actions; and
reporting a predicted result based on a similarity of the action with at least one of the plurality of prior actions.

2. The method of claim **1,** further comprising determining a first vector for the action.

3. The method of claim **1,** further comprising determining the predicted result based on a distance between the first cluster of actions and the second cluster of actions.

4. The method of claim **1,** wherein the operation is an update to the computing devices.

5. The method of claim **1,** further comprising presenting a recommendation based on the predicted result.

6. The method of claim **1,** wherein the action includes a plurality of operations.

7. The method of claim **1,** further comprising:
training a machine learning model based on the plurality of prior actions; and
determining the predicted result based on analyzing the action based on the machine learning model.

8. An apparatus comprising:
interface circuitry;
instructions;
programmable circuitry to at least one of execute or implement the instructions to:
determine a first cluster of actions and a second cluster of actions of a plurality of prior actions;
determine a distance between the first cluster and the second cluster;
determine an action to be performed for a plurality of computing devices based on the distance, the action includes information that identifies the computing devices and an operation to be performed on the computing devices;
compare the action with a plurality of prior actions; and
report a predicted result based on a similarity of the action with at least one of the plurality of prior actions.

9. The apparatus of claim 8, wherein the programmable circuitry is to determine a first vector for the action.

10. The apparatus of claim 8, wherein the programmable circuitry is to determine the predicted result based on a distance between the first cluster of actions and the second cluster of actions.

11. The apparatus of claim 8, wherein the operation is an update to the computing devices.

12. The apparatus of claim 8, wherein the programmable circuitry is to present a recommendation based on the predicted result.

13. The apparatus of claim 8, wherein the action includes a plurality of operations.

14. The apparatus of claim 8, wherein the programmable circuitry is to:
train a machine learning model based on the plurality of prior actions; and
determine the predicted result based on analyzing the action based on the machine learning model.

15. A non-transitory machine readable storage medium comprising instructions to cause programmable circuitry to implement the method of any one of claims 1-7.
